# DEMANDE DE BREVET EUROPEEN

(11) **EP 1 707 040 A1**
(43) Date de publication de la demande: **04.10.2006**
(21) Numéro de dépôt: 06300173.9
(22) Date de dépôt: 28.02.2006
(51) Int. Cl.: A01B 1/14

(54) **Outil manuel de jardinage**

(30) Priorité: 31.03.2005 FR 0503161
(71) Demandeur: SPI, 38140 Renage (FR)
(72) Inventeur: Experton, Thierry, 38640 Claix (FR)
(74) Mandataire: Vuillermoz, Bruno

(57) **Abrégé**

Cet outil manuel de jardinage comprenant un manche (101) et un ensemble de préhension (102). Il est muni au niveau de sa partie inférieure de moyens d'ameublissement (103), lesdits moyens (103) possédant une pluralité d'organes fouisseurs (104) destinés à travailler la terre, chacun desdits organes fouisseurs (104) présentant une pluralité d'ailettes (105, 106, 107) dirigées radialement par rapport à l'axe (111) du manche (101), et aptes à faciliter l'ameublissement.

## Description

### DOMAINE DE L'INVENTION

La présente invention concerne un outil manuel de jardinage, en particulier du type destiné à ameublir ou à aérer la terre. En particulier, la présente invention se rapporte à un outil manuel possédant des moyens d'ameublissement de la terre, que l'on actionne en l'enfonçant dans la terre avant d'imprimer une rotation à l'outil sur lui-même, aérant ainsi la terre au niveau de l'outil.

### ETAT DE LA TECHNIQUE

Dans le but d'ameublir la terre, de nombreux outils manuels ont été proposés, dont les plus simples consistent en une bêche ou en une binette. Parmi les outils plus élaborés, on peut citer l'outil manuel rotatif décrit dans le document US-A-6 076 614. Un tel outil est maniable et relativement efficace pour l'ameublissement de terreaux.

Cependant, son efficacité peut être réduite en cas de terre dure ou compacte, comme par exemple lorsque le terrain est sec ou lorsqu'il est argileux et humide. Dans ce cas, l'aptitude d'un tel outil pour ameublir la terre peut être limitée, rendant plus difficile la manoeuvre de l'outil lorsque ses organes d'ameublissement se trouvent enfoncés dans la terre et requérant d'autant plus d'efforts pour la manipulation de l'outil.

De plus, dans un tel cas, il peut être utile de s'aider du pied pour enfoncer l'outil dans la terre. Mais, là encore, l'outil décrit dans le document US-A-6 076 614 peut présenter un inconvénient, car la forme de son organe d'ameublissement n'est pas adaptée pour servir d'appui au pied de l'utilisateur. Cela est particulièrement vrai lorsque la terre est humide, car les dents de l'outil, seul appui possible pour le pied du jardinier, peuvent s'avérer glissantes et le pied risque d'échapper sans permettre d'aider à l'enfoncement de l'outil dans la terre.

Par ailleurs, les organes d'ameublissement des outils aratoires de l'art antérieur présentent généralement la forme de dents à section symétrique, en particulier circulaire, ou à symétrie de révolution. De tels organes ne sont donc renforcés dans aucune direction particulière et nécessitent de ce fait un éventuel surdimensionnement, donc un surpoids, dans les directions de faibles contraintes.

Or, les organes d'ameublissement peuvent entrer en collision avec des parties de terre durcie, voire avec des pierres. La géométrie des organes d'ameublissement revêt donc une importance primordiale pour optimiser leur poids en rapport à leur résistance aux contraintes opérationnelles, et, partant, augmenter la durée de vie de l'outil.

### EXPOSE DE L'INVENTION

L'objet de la présente invention est donc de proposer un outil manuel de jardinage présentant une efficacité d'ameublissement augmentée, un rapport du poids sur la résistance mécanique optimisé et une utilisation ergonomique, en particulier pour l'appui du pied de l'utilisateur.

La présente invention concerne ainsi un outil manuel de jardinage, comprenant un manche et un ensemble de préhension, et présentant au niveau de la partie inférieure du manche des moyens d'ameublissement, lesquels possèdent une pluralité d'organes fouisseurs destinés à travailler la terre. Selon l'invention, chacun des organes fouisseurs présente une pluralité d'ailettes ou de saillies dirigées radialement par rapport à l'axe du manche, et aptes à faciliter l'ameublissement.

Autrement dit, l'outil de l'invention présente des embouts fouisseurs munis d'ailettes, qui permettent d'ameublir efficacement la terre entourant les embouts fouisseurs.

En pratique, les ailettes peuvent présenter des profils en forme de sommets de triangles complets ou tronqués. On retrouve ce genre de profil sur de nombreuses clefs de porte à fût plat. Ces profils s'avèrent particulièrement adaptés à l'ameublissement, y compris de terres dures ou compactes.

Selon une forme de réalisation pratique de l'invention, les organes fouisseurs présentent une section transversale sensiblement rectangulaire et les ailettes sont disposées sur les faces distales par rapport au manche de chacun des organes fouisseurs tandis que les faces proximales sont dépourvues d'ailettes.

Une telle section permet d'optimiser le poids des organes fouisseurs en leur conférant des propriétés mécaniques de résistance aux contraintes d'utilisation. De même, placer des ailettes seulement sur « l'extérieur » des organes fouisseurs permet également de limiter leur poids.

Avantageusement, les organes fouisseurs peuvent être identiques et donc présenter des dimensions analogues, ou différents. Ils peuvent être courbés semblablement et ils peuvent être chacun orienté de telle sorte que leurs extrémités libres soient réparties autour de l'axe principal du manche, et situées sensiblement à la même distance de l'extrémité inférieure du manche et sensiblement à la même distance de l'axe principal du manche, définissant ainsi une forme en cloche. Cette forme en cloche de l'ensemble des organes fouisseurs contribue également à l'efficacité de l'ameublissement et permet de limiter le moment résistant à l'effort de l'utilisateur en en limitant le bras de levier, notamment par rapport à des organes fouisseurs plus écartés.

De manière avantageuse, au moins l'un desdits organes fouisseurs peut présenter au moins une courbure secondaire, définissant ainsi une surface gauche développable. Cela signifie que la forme de l'organe fouisseur n'est pas plane, mais présente au moins deux courbures selon des directions non coplanaires. Cette caractéristique supplémentaire accroît l'efficacité de l'ameublissement, car elle améliore la capacité de pénétration des moyens d'ameublissement dans la terre lors de la rotation de l'outil, qui agit ainsi à l'instar d'un foret.

De préférence, les moyens d'ameublissement comportent quatre organes fouisseurs, symétriquement répartis deux à deux par rapport à l'axe principal du manche, possédant chacun une pluralité de saillies ou d'ailettes radiales disposées sur la face distale par rapport audit manche, et présentant chacun une surface gauche telle que précédemment évoquée. On réalise ainsi un outil hybride entre le foret et la fourche, qui s'avère particulièrement efficace pour l'ameublissement.

Selon une forme de réalisation de l'invention, l'outil présente au niveau de sa partie inférieure, une plaque, et notamment une rondelle annulaire, fixée au niveau de la partie inférieure du manche et reposant sur les organes fouisseurs.

Avantageusement, ladite plaque présente une forme annulaire, ou de rondelle, coaxiale avec le manche. De plus, elle est solidarisée sur le manche au niveau de son extrémité inférieure. La plaque ainsi définie contribue à augmenter la rigidité des moyens d'ameublissement, en particulier selon un plan transversal à l'axe du manche.

Selon une forme de réalisation de l'invention, le manche présente au niveau de sa partie supérieure, un moyen de réglage de la hauteur de l'outil, qui se compose d'un tube creux susceptible de coulisser sur le manche, et d'y être solidarisé au moyen d'un organe de serrage actionnable à la main. Autrement dit, l'outil présente une sorte de barre télescopique, dont la longueur peut être adapté à la taille de tout utilisateur au moyen d'une manoeuvre rapide, opérée sur le moyen de serrage, qui peut consister par exemple en un système vis-écrou, dont l'écrou présente une tête ergonomique tel qu'un bouton moleté ou à papillon.

Avantageusement, l'ensemble de préhension de l'outil manuel présente globalement une forme en « S », dont le centre de symétrie est situé dans le prolongement du manche. Ainsi, les extrémités du « S » forment les poignées par lesquelles l'utilisateur peut saisir l'outil et le manipuler efficacement.

En pratique, l'ensemble de préhension est solidarisé au niveau de la partie supérieure du manche. Cela permet d'optimiser la hauteur dudit manche, en n'utilisant que la longueur et l'encombrement nécessaires.

### DESCRIPTION SOMMAIRE DES FIGURES

La manière dont l'invention peut être réalisée et les avantages qui en découlent, ressortiront mieux de l'exemple de réalisation qui suit, donné à titre indicatif et non limitatif à l'appui des figures annexées.
La figure 1 est une représentation schématique en perspective sommaire d'un outil manuel de jardinage conforme à l'invention.
La figure 2 est une représentation schématique en perspective sommaire d'un détail de la figure 1.

### MODE DE REALISATION DETAILLE DE L'INVENTION

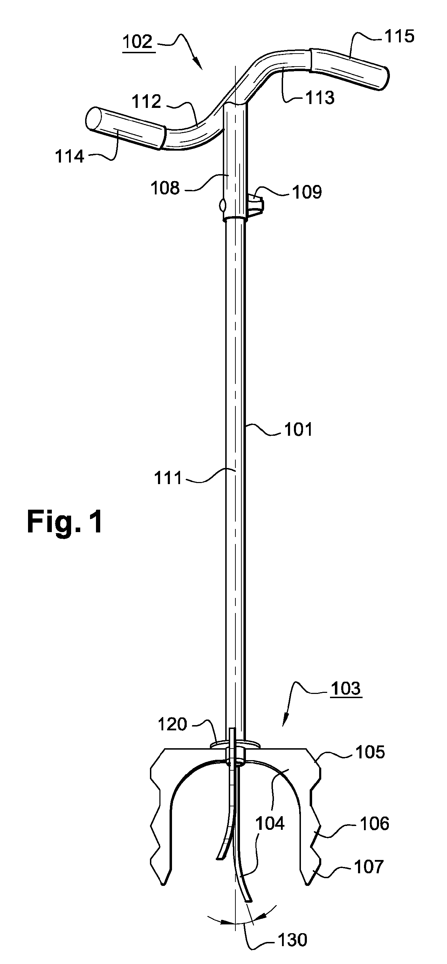

La figure 1 illustre un outil manuel de jardinage conforme à l'invention. L'outil manuel de jardinage comprend un manche (101), dont l'extrémité supérieure est munie d'un ensemble de préhension (102), et dont l'extrémité inférieure présente des moyens d'ameublissement (103).

L'utilisateur peut manipuler l'outil au moyen de l'ensemble de préhension (102), en lui impulsant des mouvements circulaires et/ou translatoires. Le manche (101) permet de transmettre aux moyens d'ameublissement (103) les efforts que peut exercer l'utilisateur dans le but de travailler la terre. Le manche (101) peut présenter la forme et la section voulues, dans la mesure où son dimensionnement lui permet de résister aux efforts, notamment de torsion, que peut exercer l'utilisateur. Un tel dimensionnement peut être déterminé sans difficulté par l'homme du métier.

Comme le montre la partie inférieure de la figure 1, les moyens d'ameublissement (103) possèdent des organes fouisseurs (104), orientés vers le sol. De plus, selon une caractéristique de l'invention, les quatre organes fouisseurs (104) se présentent sous formes d'embouts, ayant sensiblement les mêmes dimensions. Ces organes sont en outre courbés semblablement en « L », chacun des embouts étant orienté de telle sorte que leurs extrémités libres soient uniformément réparties autour de l'axe principal (111) du manche (101) et situées sensiblement à la même distance de l'extrémité inférieure dudit manche, et sensiblement à la même distance de l'axe principal (111) de ce dernier.

On définit ainsi une forme de cloche, présentant une symétrie de révolution. En d'autres termes, les extrémités des organes fouisseurs (104) occupent des positions localisées sur un cercle, dont le centre est aligné avec l'axe principal (111) du manche (101). Les organes fouisseurs (104) sont donc positionnés sur deux axes orthogonaux. Leurs « bras » proximaux, c'est-à-dire proches du manche (101), s'étendent selon des directions radiales dans un plan perpendiculaire à l'axe principal (111) du manche (101). Puis leurs deuxièmes extensions s'étendent selon une direction axiale, c'est-à-dire sensiblement parallèlement à la direction principale du manche (111) de l'outil. Cette forme en cloche de l'ensemble des organes fouisseurs contribue également à l'efficacité de l'ameublissement et permet de réduire le moment résistant à l'effort de l'utilisateur en en limitant le bras de levier.

Comme on peut le voir sur les figures, les organes fouisseurs (104) présentent une section transversale rectangulaire. Une telle section permet d'optimiser le poids des organes fouisseurs en leur conférant des propriétés mécaniques de résistance aux contraintes d'utilisation. En effet, le moment d'inertie selon la direction radiale est plus important, ce qui permet notamment de résister aux chocs lors de l'introduction de l'outil dans des terrains durs.

Selon une caractéristique de l'invention, chacun des organes fouisseurs (104) présente trois ailettes en saillies (105, 106, 107) toutes dirigées radialement, c'est-à-dire perpendiculairement à l'axe principal (111) du manche (101), qui constitue la direction axiale. Les ailettes (105, 106, 107) sont aptes à faciliter l'ameublissement. En effet, elles forment autant de moyens, qui permettent d'ameublir efficacement la terre entourant les embouts que forment les quatre organes fouisseurs (104).

En outre, les ailettes (105, 106, 107) assurent également le rôle de raidisseurs. En effet, elles participent à la solidité des organes fouisseurs (104), car elles en augmentent le moment d'inertie en des endroits et selon des directions parmi les plus sollicités au cours de l'utilisation. De plus, la profondeur radiale des ailettes augmente l'effet d'ameublissement en contribuant à casser les mottes et le brassage de la terre.

Les ailettes (105, 106, 107) renforcent localement les organes fouisseurs (104), notamment pour les cas où ceux-ci entreraient en collision avec des parties de terre durcie, voire avec des pierres. La géométrie des organes fouisseurs (104) permet ainsi d'optimiser leur résistance aux contraintes opérationnelles relativement à leur poids, qui constitue un critère ergonomique non négligeable.

Dans l'exemple des figures, les ailettes (105, 106, 107) sont, conformément à l'invention, dirigées radialement. Elles sont, de plus, disposées sur la face distale des organes fouisseurs (104) par rapport au manche (101). Autrement dit, le profil de chacun des organes fouisseurs (104) est « droit » ou sans relief dans la zone interne, tandis qu'il se présente « cranté » par les ailettes (105, 106, 107) au niveau de la face distale ou zone externe.

Cependant, les ailettes (105, 106, 107) pourraient également être situées sur les faces proximales des organes fouisseurs.

Les ailettes (105, 106, 107) représentées sur la figure 1 présentent des profils en forme de sommets de triangles complets ou tronqués, comme on en trouve sur de nombreuses clefs de porte à fût plat. Ces profils d'ailette permettent de réaliser un ameublissement efficace, y compris de terres dures ou compactes.

De plus, selon une autre caractéristique de l'invention, et ainsi qu'on peut l'observer sur deux des quatre organes fouisseurs (104) représentés sur la figure 1, lesdits organes présentent une courbure secondaire, définissant ainsi une surface gauche développable, donc non plane, et qui présente, en l'espèce, au moins deux courbures selon des directions non coplanaires. Ainsi, l'extrémité des organes fouisseurs (104) forment un angle (130) avec l'axe (111) du manche (101).

Cette caractéristique, en combinaison avec les autres caractéristiques de l'invention, accroît l'efficacité de l'ameublissement, car elle améliore la capacité de pénétration des organes fouisseurs (104) dans la terre lors de la rotation de l'outil, et donc des moyens d'ameublissement (103), qui agissent ainsi à l'instar d'un foret. L'utilisateur, en manipulant l'outil, peut ainsi lui imprimer un mouvement partiellement hélicoïdal, comme celui d'une vis ou, d'une scie-cloche. Les moyens d'ameublissement (103) correspondent ainsi à un instrument hybride entre le foret et la fourche, dont l'efficacité d'ameublissement est améliorée par rapport aux géométries employées sur les outils de l'art antérieur.

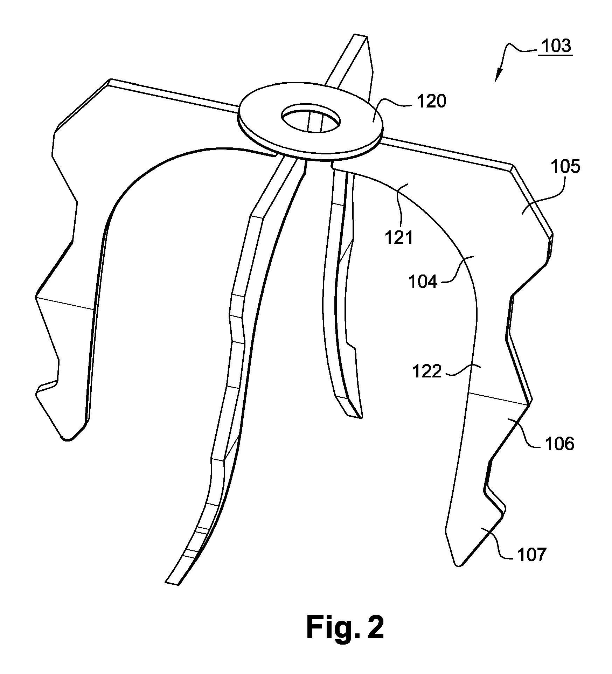

La figure 2 illustre de manière plus détaillée le moyen d'ameublement (103). Il présente, au niveau de la partie inférieure du manche, une rondelle ou une plaque de forme annulaire (120), centrée sur l'axe dudit manche (101). La plaque (120) et les organes fouisseurs (104) sont solidarisés sur le manche (101), par exemple par soudage ou par vissage, au niveau de la partie inférieure du manche (101). En fonction du mode d'assemblage retenu, la liaison entre le manche (101) et les moyens d'ameublissement (103) est démontable ou non. Par ailleurs, la plaque (120) peut être constituée, comme dans l'exemple des figures, d'une simple rondelle disponible en quincaillerie.

Dans le mode d'assemblage décrit, le manche (101) traverse la plaque annulaire (120) et lui est solidarisé de façon amovible de telle sorte que les moyens d'ameublissement (103) soient interchangeables, par exemple pour monter des moyens d'ameublissement adaptés au terrain à travailler. Par ailleurs, la plaque (120) contribue à augmenter la rigidité des moyens d'ameublissement, en particulier selon un plan transversal à l'axe du manche (101).

Ainsi qu'on peut l'observer sur les figures 1 et 2, la zone active (122) des organes fouisseurs (104) est solidarisée au manche (101) et/ou à la plaque annulaire (120) par un bras (121) s'étendant perpendiculairement par rapport au manche (101). Dans la pratique, l'ensemble bras - zone active (122) de chaque organe fouisseur (104) est monobloc et peut-être obtenu par usinage.

Les bras (121) présentent des dimensions telles, notamment largeur, qu'ils confèrent un effet poutre, qui, en coopération avec la plaque annulaire, servent de zone d'appui pour le pied de l'utilisateur, facilitant ainsi l'insertion des organes fouisseurs (104) dans la terre. Ainsi, l'utilisateur peut s'aider de son propre poids pour exercer un effort vertical sur l'outil, afin d'en assurer la pénétration, et notamment celle des organes fouisseurs (104) dans la terre, en particulier dans une terre dure ou compacte.

Par ailleurs, la figure 1 représente, au niveau de la partie supérieure du manche (101), un moyen de réglage (110) de la hauteur de l'outil. Le moyen de réglage (110) se compose d'un tube creux (108), susceptible de coulisser sur le manche (101). De plus, le tube creux (108) peut être solidarisé au manche (101) au moyen d'un organe de serrage (109), ici un écrou papillon vissé sur une vis traversante et épaulée sur le tube creux (108), actionnable à la main. L'outil ainsi équipé comporte une sorte de barre télescopique, dont la longueur peut être adaptée à la taille de tout utilisateur au moyen d'un simple deserrage-serrage de l'écrou papillon.

Comme illustré sur la figure 1, l'ensemble de préhension (102) de l'outil manuel est solidarisé au niveau de la partie supérieure du manche (101) et présente globalement la forme d'un « S », dont le centre de symétrie est situé dans le prolongement du manche (101). Plus précisément, l'ensemble de préhension (102) présente deux courbures (112, 113) en sens opposé et contenues dans un plan sensiblement perpendiculaire à l'axe principal (111) du manche (101).

Les courbures (112, 113) sont de rayon semblable et situées de part et d'autre et à des distances identiques du prolongement du manche (101), ce qui donne à l'ensemble de préhension la forme du « S » précédemment évoquée. De plus, les extrémités du « S » comportent des poignées (114, 115) conventionnelles, par le biais desquelles l'utilisateur peut saisir l'outil et le manipuler.

Par ailleurs, la partie en « S » du manche, ou guidon, n'est pas extensible. Cependant, on pourrait prévoir une partie extensible en tant que de besoin.

L'outil manuel de jardinage présenté en relation avec les figures constitue une forme de réalisation de l'invention. D'autres formes peuvent être adoptées sans pour autant sortir du cadre de cette invention.

Un tel outil peut trouver son application dans l'ameublissement de terreaux, mais aussi d'autres matériaux, comme le sable par exemple.

## Revendications

1. Outil manuel de jardinage, comprenant un manche (101) et un ensemble de préhension (102), et muni au niveau de sa partie inférieure de moyens d'ameublissement (103), lesdits moyens (103) possédant une pluralité d'organes fouisseurs (104) destinés à travailler la terre, ***caractérisé* en ce que** chacun desdits organes fouisseurs (104) présente une pluralité d'ailettes (105, 106, 107) dirigées radialement par rapport à l'axe (111) du manche (101), et aptes à faciliter l'ameublissement.

2. Outil manuel de jardinage selon la revendication 1, ***caractérisé* en ce que** les ailettes (105, 106, 107) présentent des profils en forme de sommets de triangles complets (106) ou tronqués (105).

3. Outil manuel de jardinage selon l'une des revendications 1 à 2, ***caractérisé* en ce que** les organes fouisseurs (104) présentent une section transversale sensiblement rectangulaire et **en ce que** lesdites ailettes (105, 106, 107) sont disposées sur la face distale par rapport au manche (101) de chacun desdits organes fouisseurs (104) tandis que les faces proximales sont dépourvues d'ailettes.

4. Outil manuel de jardinage selon l'une des revendications précédentes, ***caractérisé :***
• **en ce que** les organes fouisseurs (104) présentent chacun une zone active (122) solidarisée au manche (101) et/ou à une plaque annulaire (120) fixée sur le manche par un bras (121) s'étendant perpendiculairement au manche (101),
• **en ce que** les organes fouisseurs (104) présentent des dimensions analogues,
• **en ce qu'**ils sont courbés de manière semblable,
• et **en ce qu'**ils sont uniformément répartis par rapport à l'axe (111) du manche (101), définissant ainsi une forme de cloche.

5. Outil manuel de jardinage selon l'une des revendications précédentes, ***caractérisé* en ce qu'**au moins l'un des organes fouisseurs (104) présente au moins une courbure secondaire, définissant ainsi une surface gauche développable.

6. Outil manuel de jardinage selon l'une des revendications précédentes, ***caractérisé* en ce que** lesdits moyens d'ameublissement (103) comportent quatre organes fouisseurs (104), symétriquement répartis deux à deux par rapport à l'axe (111) du manche (101), chacun desdits organes fouisseurs (104) possédant une pluralité d'ailettes (105) disposées sur la face distale par rapport au manche (101), et présentant chacun une surface gauche.

7. Outil manuel de jardinage selon l'une des revendications précédentes, ***caractérisé* en ce qu'**il présente en outre au niveau de sa partie inférieure, une plaque (120) fixée au niveau de la partie inférieure du manche (101) et reposant sur les organes fouisseurs (104).

8. Outil manuel de jardinage selon la revendication 7, ***caractérisé* en ce que** la plaque (120) présente une forme annulaire coaxiale avec l'axe du manche 101) et **en ce qu'**elle est solidarisée sur le manche (101) au niveau de l'extrémité inférieure.

9. Outil manuel de jardinage selon l'une des revendications précédentes, ***caractérisé* en ce que** le manche (101) possède au niveau de sa partie supérieure un moyen de réglage de la hauteur de l'outil, ledit moyen de réglage se composant d'un tube creux (108) susceptible de coulisser sur le manche (101) et d'y être solidarisé au moyen d'un organe de serrage (109) actionnable à la main.

10. Outil manuel de jardinage selon l'une des revendications précédentes, ***caractérisé* en ce que** l'ensemble de préhension (102) présente globalement une forme de « S », dont le centre de symétrie est situé dans le prolongement du manche (101).

11. Outil manuel de jardinage selon l'une des revendications précédentes, ***caractérisé* en ce que** l'ensemble de préhension (102) est solidarisé au niveau de la partie supérieure du manche (101).
